# EUROPEAN PATENT APPLICATION

(11) **EP 4 586 204 A1**
(43) Date of publication of application: **16.07.2025**
(21) Application number: 24156489.7
(22) Date of filing: 08.02.2024
(51) Int. Cl.: G06T 15/20, G06T 15/08, G06T 17/00

(54) **PROCESSING IMMERSIVE VIDEO**

(30) Priority: 12.01.2024 WO PCT/CN2024/071964
(71) Applicant: Koninklijke Philips N.V., 5656 AG Eindhoven (NL)
(72) Inventor: CHEN, Hongxin, 5656 AG Eindhoven (NL); GU, Hai, 5656AG Eindhoven (NL); MA, Fulong, 5656 AG Eindhoven (NL)
(74) Representative: Philips Intellectual Property & Standards

(57) **Abstract**

Methods and systems for processing immersive video data. Depth information is generated for a plurality of 2D image frames, and a confidence measure for the depth information is determined for each of a plurality of regions in each 2D image frame. An implicit neural visual representation is trained using the regions for which the confidence measure fails to exceed a threshold. The depth information for which the confidence measure exceeds the threshold may be used to render one or more regions of an image frame at a target viewpoint. The trained implicit neural visual representation may be used to render any remaining pixels in the image frame at the target viewpoint.

## Description

### FIELD OF THE INVENTION

The invention relates to the field of immersive video.

### BACKGROUND OF THE INVENTION

Six degree of freedom (6 DoF) immersive video allows a scene to be viewed from different positions and orientations. The creation of 6 DoF immersive video uses multiple cameras to capture images of a scene from different viewpoints. The captured images are then processed to generate an image at a new viewpoint.

One approach to generating an image at a new viewpoint involves processing the captured images to estimate a depth map for each of the captured images. The depth maps provide information about the 3D geometry of the scene. An image at a new viewpoint is generated by projecting each point in the 3D scene to the imaging plane of a virtual camera at the new viewpoint.

This approach relies on the accuracy of the depth estimation process. If there are inaccuracies in depth estimation, for example, as a result of light reflection or weak texture (i.e. little local variation in color) in an image region, an image generated at a new viewpoint will have low quality and may contain visible artifacts.

Another approach for generating an image at a new viewpoint involves the use of a neural network to model the scene. For instance, a neural radiance field (NeRF) algorithm outputs a color and density of a point in the 3D scene emitting light in a particular direction based on an input of the 3D coordinates of the point and the direction of light. The color of a pixel in an image at a new viewpoint is determined by using the NeRF algorithm to provide the color and density for several points along a ray linking the pixel to the new viewpoint, and integrating the colors of these points, weighted by density. This approach provides high quality images of scenes from new viewpoints, even in cases that would result in low quality images using the depth estimation approach.

A NeRF algorithm is trained for a specific scene using images of the scene from different viewpoints as ground truth. The training process can take several hours. Rendering a new image using the trained NeRF algorithm typically takes several minutes, at least. The use of a NeRF algorithm is therefore much less efficient than traditional depth estimation methods.

### SUMMARY OF THE INVENTION

The invention is defined by the claims.

According to examples in accordance with an aspect of the invention, there is provided a method for processing immersive video data, the method comprising: obtaining a plurality of 2D image frames of a scene, each 2D image frame having been acquired from a different viewpoint; processing the plurality of 2D image frames to generate depth information for the scene; for each 2D image frame: processing the depth information to determine, for each of a plurality of regions in the 2D image frame, a confidence measure for the depth information for the region; identifying each region for which the confidence measure exceeds a predetermined confidence threshold as a first region; and identifying each region for which the confidence measure fails to exceed the predetermined confidence threshold as a second region; and training an implicit neural visual representation using the second regions from the plurality of 2D image frames.

By training the implicit neural visual representation using only regions for which the generated depth information has a low confidence, the training time of the neural implicit visual representation can be greatly reduced. The inventors have recognized that the use of a neural implicit visual representation is most advantageous when rendering regions of a scene for which depth information is inaccurate or unreliable, and that a neural implicit visual representation trained only on these scene therefore still provides the advantages of the neural approach when rendering an image at a new viewpoint.

In some examples the implicit neural visual representation is a neural volume rendering model; and the step of training the implicit neural visual representation comprises: generating a sampling ray for each pixel in each second region in each 2D image frame; processing the depth information to define a set of sampling points along the sampling ray for each pixel; training the implicit neural visual representation for the set of sampling points for each pixel, using the color of each pixel as ground truth.

A neural volume rendering model is an implicit neural visual representation that outputs a color and density for a 3D point in the scene. The colors and densities of sampling points along a sampling ray, which passes through a pixel of an image frame and the focal point for the image frame, may then be used to determine a color for the pixel. By using the depth information to define the set of sampling points, the total number of sampling points may be reduced, thus further improving an efficiency of training the implicit neural visual representation.

In some examples, the step of processing the depth information to define a set of sampling points along the sampling ray for each pixel in each second region comprises, for each pixel: defining a plurality of initial sampling points for the sampling ray for the pixel; and for each initial sampling point: projecting the initial sampling point to each 2D image frame, other than the 2D image frame to which the pixel belongs, to identify a projected pixel in each 2D image frame; and in response to a determination that each projected pixel is within a first region of the respective 2D image frame: inversely projecting each projected pixel to the scene, using the depth value of the projected pixel, to identify an inversely-projected point for each projected pixel; determining a distance between each inversely-projected point and the initial sampling point; and in response to a determination that the distances between the initial sampling point and each inversely-projected point are all greater than a predetermined distance, excluding the initial sampling point from the set of sampling points for the pixel.

If all the projected pixels have high confidence depth values, and none of the inversely-projected points are close to the initial sampling point, it is likely that the initial sampling point has a 3D position in the scene that does not provide useful information for rendering the scene (e.g. a position of air in the scene).

There is also provided a method for rendering an image frame at a target viewpoint, the method comprising: obtaining: a plurality of 2D image frames of a scene, each 2D image frame having been acquired from a different viewpoint; depth information for the scene; information identifying one or more first regions and one or more second regions of each 2D image frame; and information defining an implicit neural visual representation trained using the second regions of the plurality of 2D image frames; defining a target viewpoint; processing the first regions from the plurality of 2D image frames and the depth information for the first regions to determine a color value for each of a plurality of pixels in an image frame at the target viewpoint; and for each pixel in the image frame for which a color value has not been determined by processing the first regions and the depth information for the first regions, using the defined implicit neural visual representation to determine a color value for the pixel.

By using the implicit neural visual representation to determine color values only for pixels for which a color value cannot be determined using high-confidence depth information, a rendering time of the image frame at the target viewpoint is reduced, while still producing a high-quality image frame.

In some examples, the defined implicit neural visual representation is a neural volume rendering model; and the step of using the defined implicit neural visual representation to determine a color value for the pixel comprises: generating a sampling ray for the pixel based on the target viewpoint; defining a set of sampling points along the sampling ray; using the implicit neural visual representation to generate a color and density for each sampling point; and processing the generated colors and densities to determine a color value for the pixel.

In some examples, the step of defining a set of sampling points along the sampling ray for each pixel comprises processing the depth information to define the set of sampling points.

By using the depth information to define the set of sampling points, the total number of sampling points may be reduced, thus further improving an efficiency of rendering using the implicit neural visual representation.

In some examples, the step of defining a set of sampling points along the sampling ray for each pixel comprises, for each pixel: defining a plurality of initial sampling points for the sampling ray for the pixel; and for each initial sampling point: projecting the initial sampling point to each 2D image frame, other than the 2D image frame to which the pixel belongs, to identify a projected pixel in each 2D image frame; and in response to a determination that each projected pixel is within a first region of the respective 2D image frame: inversely projecting each projected pixel to the scene, using the depth value of the projected pixel, to identify an inversely-projected point for each projected pixel; determining a distance between each inversely-projected point and the initial sampling point; and in response to a determination that the distances between the initial sampling point and each inversely-projected point are all greater than a predetermined distance, excluding the initial sampling point from the set of sampling points for the pixel.

In some examples, the implicit neural visual representation is a neural radiance field model.

There is also proposed a computer program product comprising computer program code means which, when executed on a computing device having a processing system, cause the processing system to perform all of the steps of any of the methods described above.

According to examples in accordance with another aspect of the invention, there is provided a first processing system for processing immersive video, the first processing system being configured to: obtain a plurality of 2D image frames of a scene, each 2D image frame having been acquired from a different viewpoint; process the plurality of 2D image frames to generate depth information for the scene; for each 2D image frame: process the depth information to determine, for each of a plurality of regions in the 2D image frame, a confidence measure for the depth information for the region; identify each region for which the confidence measure exceeds a predetermined confidence threshold as a first region; and identify each region for which the confidence measure fails to exceed the predetermined confidence threshold as a second region; and train an implicit neural visual representation using the second regions from the plurality of 2D image frames.

In some examples, the implicit neural visual representation is a neural volume rendering model; and the first processing system is configured to train the implicit neural visual representation by: generating a sampling ray for each pixel in each second region in each 2D image frame; processing the depth information to define a set of sampling points along the sampling ray for each pixel; training the implicit neural visual representation for the set of sampling points for each pixel, using the color of each pixel as ground truth.

There is also provided a second processing system for rendering an image frame at a target viewpoint, the second processing system being configured to: obtain: a plurality of 2D image frames of a scene, each 2D image frame having been acquired from a different viewpoint; depth information for the scene; information identifying one or more first regions and one or more second regions of each 2D image frame; and information defining an implicit neural visual representation trained using the second regions of the plurality of 2D image frames; define a target viewpoint; process the first regions from the plurality of 2D images and the depth information for the first regions to determine a color value for each of a plurality of pixels in an image frame at the target viewpoint; and for each pixel in the image frame for which a color value has not been determined by processing the first regions and the depth information for the first regions, use the defined implicit neural visual representation to determine a color value for the pixel.

In some examples, the defined implicit neural visual representation is a neural volume rendering model; and the second processing system is configured to use the defined implicit neural representation to determine a color value for the pixel by: generating a sampling ray for the pixel based on the target viewpoint; defining a set of sampling points along the sampling ray; using the implicit neural visual representation to generate a color and density for each sampling point; and processing the generated colors and densities to determine a color value for the pixel.

In some examples, the second processing system is configured to define the set of sampling points along the sampling ray by processing the depth information to define the set of sampling points.

There is also proposed a bitstream, comprising: encoded imaging data comprising a plurality of 2D image frames of a scene, each 2D image frame having been acquired from a different viewpoint; encoded depth information for the scene; encoded information identifying one or more first regions and one or more second regions of each 2D image frame; and encoded information defining an implicit neural visual representation trained using the second regions of the plurality of 2D image frames.

According to examples in accordance with another aspect of the invention, there is provided an encoder configured to encode immersive video, the encoder being configured to: obtain a plurality of 2D image frames of a scene, each 2D image frame having been acquired from a different viewpoint; process the plurality of 2D image frames to generate depth information for the scene; for each 2D image frame: process the depth information to determine, for each of a plurality of regions in the 2D image frame, a confidence measure for the depth information for the region; identify each region for which the confidence measure exceeds a predetermined confidence threshold as a first region; and identify each region for which the confidence measure fails to exceed the predetermined confidence threshold as a second region; train an implicit neural visual representation using the second regions from the plurality of 2D image frames; and encode the plurality of 2D image frames, depth information, information identifying the first regions and second regions and information defining the trained implicit neural visual representation into a bitstream.

There is also proposed an decoder configured to decode immersive video, the decoder being configured to: receive a bitstream comprising: encoded imaging data comprising a plurality of 2D image frames of a scene, each 2D image frame having been acquired from a different viewpoint; encoded depth information for the scene; encoded information identifying one or more first regions and one or more second regions of each 2D image frame; and encoded information defining an implicit neural visual representation trained using the second regions of the plurality of 2D image frames; decode the imaging data, the depth information, the information identifying one or more first regions and one or more second regions of each 2D image frame and information defining an implicit neural visual representation; define a target viewpoint; process the first regions from the plurality of 2D images and the depth information for the first regions to determine a color value for each of a plurality of pixels in an image frame at the target viewpoint; and for each pixel in the image frame for which a color value has not been determined by processing the first regions and the depth information for the first regions, use the defined implicit neural visual representation to determine a color value for the pixel.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method for processing immersive video data, according to an embodiment of the invention;
Fig. 2 illustrates a sampling ray and set of sampling points for a pixel of a 2D image frame;
Fig. 3 illustrates a technique for processing the depth information for the scene to define a set of sampling points along the sampling ray for a pixel;
Fig. 4 illustrates a method for rendering an image frame at a target viewpoint, according to an embodiment of the invention; and
Fig. 5 illustrates an immersive video system, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides methods and systems for processing immersive video data. Depth information is generated for a plurality of 2D image frames, and a confidence measure for the depth information is determined for each of a plurality of regions in each 2D image frame. An implicit neural visual representation is trained using the regions for which the confidence measure fails to exceed a threshold. The depth information for which the confidence measure exceeds the threshold may be used to render one or more regions of an image frame at a target viewpoint. The trained implicit neural visual representation may be used to render any remaining pixels in the image frame at the target viewpoint.

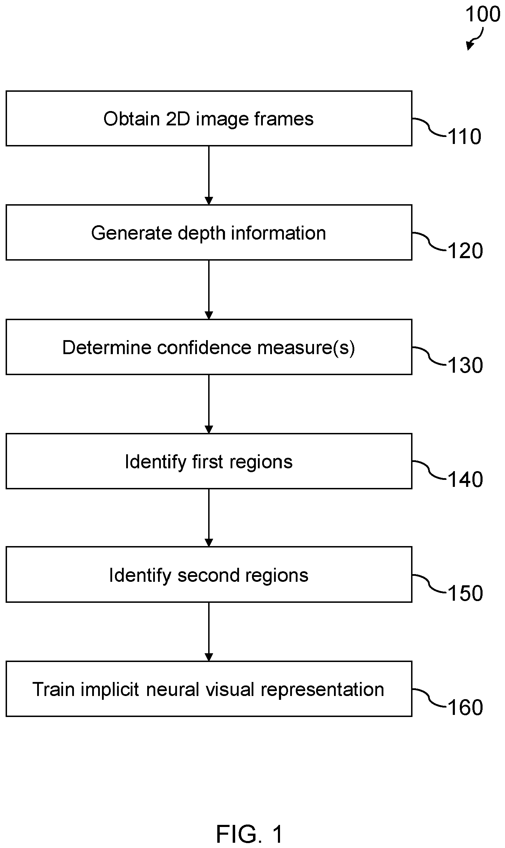

Fig. 1 illustrates a method 100 for processing immersive video data, according to an embodiment of the invention.

The method begins at step 110, at which a plurality of 2D image frames of a scene are obtained. Each of the 2D image frames has a different viewpoint of the scene. The plurality of 2D image frames may have been acquired from a plurality of cameras, each having a different position. For instance, the 2D image frames may have been acquired from cameras provided in a linear array or a grid arrangement. The use of multiple cameras for immersive video applications is well known, and suitable numbers of and arrangements of the cameras for acquiring the plurality of 2D images will be readily apparent to the skilled person.

In step 110, the plurality of 2D image frames may be obtained directly from the cameras that acquired the 2D image frames; alternatively, the plurality of 2D image frames may be obtained from another source storing the 2D image frames (e.g. a memory unit).

At step 120, depth information for the scene is generated. In some examples, the depth information may be generated by processing the plurality of 2D image frames. The use of a plurality of 2D image frames having different viewpoints to generate depth information is well known, and any suitable technique may be used to generate the depth information. For instance, corresponding points may be identified in the 2D image frames, and the depth may be determined based on the difference in position between the corresponding points and the positions of the cameras that acquired the 2D image frames. The depth information may additionally or alternatively be generated using one or more depth sensors (e.g. one or more time-of-flight sensors).

In some examples, the generated depth information may comprise a depth map for each 2D image frame. The depth maps may have the same resolution as the 2D image frames, such that each pixel of a depth map provides a depth value of the corresponding pixel in the corresponding 2D image frame (i.e. a distance from the focal point of the camera that acquired the 2D image frame and the 3D position of the point in the scene represented by the pixel along the optical axis). Other suitable formats for depth information (e.g. 3D coordinates) will be apparent to the skilled person.

At step 130, the generated depth information for the scene is processed to determine, for each of a plurality of regions in each 2D image frame, a confidence measure for the depth information for the region. The confidence measure for the depth information is a measure of a probability of error in the depth information: a higher value for the confidence measure indicates a lower probability of error in the depth value(s) for the region.

As the skilled person will appreciate, the regions for which the confidence measures are determined will depend on the depth information generation. For instance, where a depth map is generated for each 2D image frame, the determination of the confidence measures may comprise the generation of a confidence map for each depth map, where each pixel of the confidence map provides a confidence measure for the depth value of the corresponding pixel of the corresponding depth map. If each depth map has the same resolution as the corresponding 2D image frame, this provides a confidence measure for each pixel of each 2D image frame.

The type of confidence measure determined may also depend on how the depth information is generated. For instance, in examples in which the depth information is generated by identifying corresponding pixels in the 2D image frames, a confidence measure may be determined for each pixel by determining a normalized matching value between the pixel and one or more of the corresponding pixels for the pixel in other 2D image frames. In some examples, the depth information may be generated by a machine-learning algorithm that outputs both a depth estimate and a confidence measure for the depth estimate. Other suitable techniques for determining the confidence measures will be apparent to the skilled person.

At step 140, each region of each 2D image frame for which the determined confidence measure exceeds a predetermined confidence threshold is identified as a first region. In other words, the first regions of the 2D image frames are regions for which the associated depth information has a high confidence measure. As the skilled person will appreciate, suitable values for the predetermined confidence threshold will depend on the type of confidence measure used.

At step 150, each region of each 2D image frame for which the determined confidence measure fails to exceed the predetermined confidence threshold is identified as a second region. In other words, the second regions of the 2D image frames are regions for which the associated depth information has a low confidence measure.

In some examples, particularly where a confidence measure is determined for each pixel of each 2D image frame, a morphological processing technique (e.g. dilation, erosion, a morphological opening operation, a morphological closing operation, etc.) may be applied to the image after comparing the confidence measure to the predetermined confidence threshold. In this way, small areas (i.e. one or a few pixels) of the 2D image frames that have low confidence depth values (before morphological processing) but that are surrounded by higher confidence depth values may be re-classified as first regions rather than second regions.

At step 160, an implicit neural visual representation is trained using the second regions from the plurality of 2D image frames. An implicit neural visual representation is a neural network in which three-dimensional visual information for an object or scene is encoded. Typically, during training, an implicit neural visual representation learns, using ground truth views of a scene, the relationship between the 3D co-ordinates (and, in some cases, viewing direction) of a point or ray in the scene and an output for the point or ray (e.g. color, occupancy, etc.).

In some examples, the implicit neural visual representation is a neural radiance field model. A neural radiance field model is a neural volume rendering model that outputs a color and density for a point in the scene based on an input of the 3D-coordinate for the point and a viewing direction.

A neural radiance field model may be trained using the second regions from the plurality of 2D images by generating a sampling ray for each pixel in each second region in each 2D image frame and defining a set of sampling points along each sampling ray (or at least a subset of pixels including at least two pixels from each second region of each 2D image frame).

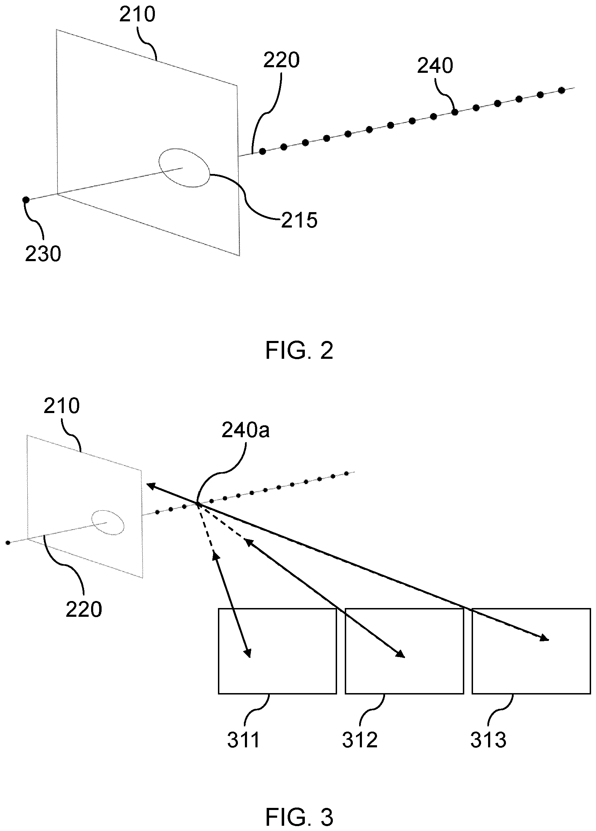

Fig. 2 illustrates a sampling ray and set of sampling points for a pixel of 2D image frame 210. The pixel of the 2D image frame is a pixel in a second region 215 of the 2D image frame. The sampling ray 220 generated for the pixel is a ray that passes through both the focal point 230 of the camera used to acquire the 2D image frame and the pixel. A number of sampling points 240 are provided along the sampling ray 220.

In Fig. 2, the sampling points 240 are provided at regular intervals along the sampling ray. In some examples, the set of sampling points used in training the neural radiance field model may be sampling points evenly distributed along the sampling point, as in Fig. 2. In other examples, the efficiency of training the neural radiance field model may be further improved by using the depth information for the scene to define the set of sampling points for each sampling ray.

Fig. 3 illustrates one technique for processing the depth information for the scene to define a set of sampling points along the sampling ray for a pixel. Fig. 3 illustrates the sampling ray 220 of Fig. 2, with initial sampling points provided at regular intervals along the line. Each initial sampling point is then in turn projected to each of the 2D image frames 311, 312, 313 (i.e. each 2D image frame other than the 2D image frame 210 to which the pixel and sampling ray belongs) by selecting the pixel in each 2D image frame that a projection line between the initial sampling point and the focal point for the camera that obtained the 2D image frame passes through. The dashed arrows in Fig. 3 indicate the projected pixels in the 2D image frames 311, 312, 313 for the initial sampling point 240a.

In response to a determination that each projected pixel is within a first region of the respective 2D image frame (i.e. each projected pixel has a depth value for which the confidence measure exceeds the predetermined confidence threshold), the depth value for each projected pixel is used to inversely project each projected pixel to the scene, by identifying the 3D point in the scene at the depth value along the projection line between the initial sampling point and the focal point for the camera that obtained the 2D image frame to which the projected pixel belongs. The solid arrows in Fig. 3 indicate the inversely-projected points for the projected pixels in the 2D image frames 311, 312, 313 for the initial sampling point 240a.

Having determined the 3D position of the inversely-projected points for an initial sampling point, the distance between each inversely-projected point and the respective initial sampling point is determined. If the inversely-projected points for an initial sampling point are all further than a predetermined distance from the initial sampling point, the initial sampling point is excluded from the set of sampling points for the sampling ray used for training the neural radiance field model. This process is repeated for each of the initial sampling points along each sampling ray in order to define the set of sampling points.

In other words, an initial sampling point may be included in the set of sampling points if one or more of the projected pixels for the initial sampling point is within a second region of the respective 2D image frame, or if all projected pixels for the initial sampling point are within a first region of the respective 2D image frame and at least one inversely-projected point for the initial sampling point is within the predetermined distance of the initial sampling point.

In another example, a neural network may be used to define a suitable set of sampling points for each pixel. For instance, a neural network may be trained to determine whether a sampling point is to be included in the set of sampling points for a sampling ray based on an input comprising the depth information. The training data for such a neural network may be generated by training neural radiance field models for various scenes using a large number of sampling points for each sampling ray (e.g. randomly selected sampling points or a predefined number of sampling points evenly distributed along the sampling ray). Having trained the neural radiance field models, a determination as to the usefulness of each sampling point may be made, and the depth information for the various scenes and determinations of usefulness for each sampling point may be used to train a neural network to identify useful sampling points.

Having defined a set of sampling points for each pixel in each second region in each 2D image frame, the neural radiance field model may be trained for the set of sampling points for each pixel (or at least a subset of pixels including at least two pixels from each second region of each 2D image frame), using the color of each pixel as ground truth. In other words, in each iteration of the training process, the outputs of the neural radiance field model for each sampling point in the set of sampling points for each pixel in each second region are processed to determine a color value for each pixel in each second region. These color values are compared with the ground truth color values, and the coefficients of the neural radiance field model are adjusted to reduce a difference between the color values and the ground truth. See Mildenhall et al. (2020), "Nerf: Representing scenes as neural radiance fields for view synthesis", European Conference on Computer Vision 2020 for further details regarding the training of a neural radiance field model.

It is to be understood that the present disclosure is not limited to the use of neural radiance field models. Other suitable implicit neural visual representations that may be used in the method 100, such as occupancy networks, neural signed distance functions or extensions of neural radiance field models (e.g. Ref-NeRF, Mip-NeRF, PixelNeRF, IBRNet, Instant NGP, etc.), and suitable techniques for training such implicit neural visual representations using the second regions from the plurality of 2D image frames to provide ground truth outputs will be apparent to the skilled person.

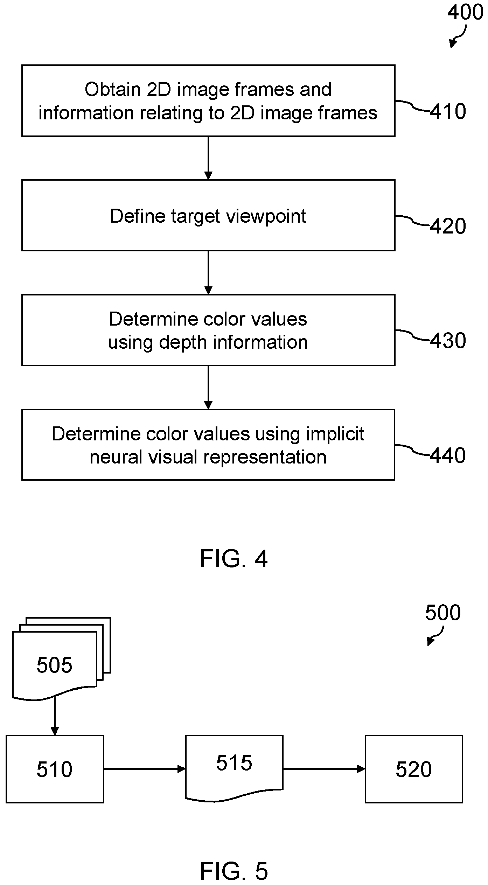

Fig. 4 illustrates a method 400 for rendering an image frame at a target viewpoint, according to an embodiment of the invention.

The method 400 begins at step 410, at which a plurality of 2D image frames of a scene, each of which have been acquired from a different viewpoint, and information relating to the plurality of 2D image frames are obtained.

The information relating to the plurality of 2D image frames comprises depth information for the scene, information identifying one or more first regions and one or more second regions of each 2D image frame, and information defining an implicit neural visual representation trained using the second regions of the plurality of 2D image frames. The first regions of the plurality of 2D image frames are image regions corresponding to depth information having a high confidence measure (i.e. above a predetermined confidence threshold), while the second regions are image regions corresponding to depth information having a low confidence measure (i.e. below a predetermined confidence threshold).

The plurality of 2D image frames and the information relating to the plurality of 2D image frames may be obtained by carrying out the method 100 of Fig. 1. In some examples, the plurality of 2D image frames and the information relating to the plurality of 2D image frames may be obtained by receiving a bitstream comprising encoded imaging data comprising the plurality of 2D image frames and encoded information relating to the plurality of 2D image frames (for instance, a processing system carrying out the method 100 of Fig. 1 may encode the plurality of 2D image frames and information relating to the plurality of 2D image frames into a bitstream). The information defining an implicit neural visual representation trained using the second regions of the plurality of 2D image frames included in the bitstream may comprise the coefficients of the trained implicit neural visual representation. In some examples, information identifying the architecture of the implicit neural visual representation may be included in the bitstream; alternatively, this may be provided by external means.

At step 420, a target viewpoint is defined. The target viewpoint is the viewpoint at which the image frame is to be rendered.

At step 430, the first regions from the plurality of 2D image frames and the depth information associated the first regions are processed to determine a color value for each of a plurality of pixels in an image frame at the target viewpoint. In other words, each point in the scene that is included in the first regions of the plurality of 2D image frames is projected to an imaging plane having a focal point at the target viewpoint. The use of depth information to render an image at a target viewpoint is well known, and suitable techniques will be apparent to the skilled person.

As the first regions of the plurality of 2D image frames do not represent the entire scene, there will typically be some pixels of the image frame at the target viewpoint for which a color value is not determined by processing the first regions and depth information.

At step 440, the implicit neural visual representation defined in the information relating to the plurality of 2D image frames is used to determine a color value for each remaining pixel in the image frame (i.e. each pixel for which a color value has not been determined by processing the first regions of the plurality of 2D image frames and the depth information for the first regions).

As the skilled person will appreciate, methods for using the implicit neural visual representation will depend on the type of implicit neural visual representation defined in the information relating to the plurality of 2D image frames.

In some examples, the implicit neural visual representation may be a neural volume rendering model, such as a neural radiance field model. The color value for each remaining pixel in the image frame at the target viewpoint may be determined by generating a sampling ray for the pixel based on the target viewpoint (i.e. such that the sampling ray passes through the target viewpoint and the position of the pixel within the imaging plane in 3D space). The sampling ray may have a predefined length (e.g. a manually defined length or a length determined using the trained implicit neural visual representation to estimate the size of the scene). A set of sampling points along the sampling ray may then be defined for each pixel, and the neural volume rendering model may be used to generate a color and density for each sampling point. The generated colors and densities for the sampling points in the set of sampling points for a pixel are then processed to determine the color value for the pixel (e.g. by integrating the colors and densities of the sampling points).

As with the training of a neural radiance field model described above, the set of sampling points for each pixel for rendering the image frame at the target viewpoint may be determined by processing the depth information.

For instance, for each pixel for which the neural radiance field model is to be used to determine the color value, a plurality of initial sampling points may be defined along the generated sampling ray for the pixel. Each initial sampling point for a pixel may then be projected to each of the plurality of 2D image frames to identify a projected pixel in each 2D image frame other than the 2D image frame to which the pixel belongs, as described above with reference to Fig. 3.

In response to a determination that each projected pixel for an initial sampling point is within a first region of the respective 2D image frame, each projected pixel may then be inversely projected to the scene using the depth value of the projected pixel to identify an inversely-projected point. The distance between the initial sampling point and each inversely-projected point for the initial sampling point may then be determined, and the initial sampling point may be excluded from the set of sampling points for the pixel if the distances are all greater than a predetermined distance. The initial sampling point may be included in the set of sampling points for the pixel if any of the projected pixels for the sampling point are within a second region of the respective 2D image frame, or if all projected pixels are within a first region of the respective 2D image frame and at least one of the inversely-projected points is within the predetermined distance of the initial sampling point.

Fig. 5 illustrates an immersive video system 500, according to an embodiment of the invention. The immersive video system comprises an encoder 510 and a decoder 520.

The encoder 510 is, itself, an embodiment of the invention. The encoder is configured to obtain a plurality of 2D image frames 505 of a scene, each 2D image frame having been acquired from a different viewpoint. The encoder may obtain the plurality of 2D image frames directly from a camera arrangement that acquired the 2D image frames, or from a source at which the 2D image frames are stored (e.g. a memory unit).

Having acquired the plurality of 2D image frames, the encoder is configured to process the plurality of 2D image frames to generate depth information for the scene, as described above. The encoder is then configured to, for each 2D image frame, process the depth information to determine a confidence measure for the depth information for each of a plurality of regions in the 2D image frame. Each region for which the confidence measure exceeds a predetermined confidence threshold is identified by the encoder as a first region, while each region for which the confidence measure fails to exceed a predetermined confidence threshold as a second region.

Having identified the first and second regions in the plurality of 2D image frames, the encoder 510 is configured to train an implicit neural visual representation using the second regions from the plurality of 2D image frames. The implicit neural visual representation may, for example, be trained using any of the methods described above.

The encoder 510 is further configured to encode, into a bitstream 515, the plurality of 2D image frames 505, the generated depth information, information identifying the one or more first regions and one or more second regions of each 2D image frame and information defining the implicit neural visual representation trained using the second regions of the plurality of 2D image frames. The bitstream 515 is, itself, an embodiment of the invention.

Suitable formats for encoding the bitstream 515 will be apparent to the skilled person. For instance, the plurality of 2D image frames and the depth information may be stored as patches in one or more atlases that are encoded in the bitstream. The information identifying the one or more first regions and one or more second regions of each 2D image frame and information defining the implicit neural visual representation trained using the second regions of the plurality of 2D image frames may be comprised in metadata of the bitstream.

The encoder 510 is configured to output the bitstream 515, and the decoder 520 is configured to receive the bitstream. In Fig. 5, the bitstream is transmitted directly from the encoder to the decoder; however, as the skilled person will readily appreciate, the bitstream may alternatively be stored on a suitable storage medium before being transmitted to the decoder.

The decoder 520 is, itself, an embodiment of the invention. The decoder is configured to decode the bitstream 515 to obtain the plurality of 2D images 505, the depth information for the scene, the information identifying the one or more first regions and one or more second regions of each 2D image frame, and information defining the implicit neural visual representation trained using the second regions of the plurality of 2D image frames.

The decoder 520 is further configured to define a target viewpoint, and to process the first regions from the plurality of 2D image frames and the depth information for the first regions to determine a color value for each of a plurality of pixels in an image frame at the target viewpoint. The decoder is then configured to determine a color value for each remaining pixel in the image frame at the target viewpoint using the implicit neural visual representation defined in the bitstream. The decoder may, for example, determine the color values using any of the methods described above.

The system 500 of Fig. 5 comprises an encoder for processing and encoding the immersive video data and a decoder for decoding and rendering an image frame at a target viewpoint. In other examples, a single processing system may be configured both to process the immersive video data and to render an image frame at a target viewpoint (i.e. omitting the steps of encoding and decoding the bitstream 515). In yet other examples, a first processing system may be configured to generate depth information based on a plurality of 2D image frames and identify first and second regions in each 2D image frame, a second processing system may be configured to train an implicit neural visual representation using the identified second regions, and a third processing system may be configured to render an image frame at a target viewpoint.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (100) for processing immersive video data, the method comprising:
obtaining a plurality of 2D image frames (505) of a scene, each 2D image frame having been acquired from a different viewpoint;
generating depth information for the scene;
for each 2D image frame:
processing the depth information to determine, for each of a plurality of regions in the 2D image frame, a confidence measure for the depth information for the region;
identifying each region for which the confidence measure exceeds a predetermined confidence threshold as a first region; and
identifying each region for which the confidence measure fails to exceed the predetermined confidence threshold as a second region; and
training an implicit neural visual representation using the second regions from the plurality of 2D image frames.

2. The method (100) of claim 1, wherein:
the implicit neural visual representation is a neural volume rendering model; and
the step of training the implicit neural visual representation comprises:
generating a sampling ray (220) for each pixel in each second region in each 2D image frame;
processing the depth information to define a set of sampling points (240) along the sampling ray for each pixel; and
training the implicit neural visual representation for the set of sampling points for each pixel, using the color of each pixel as ground truth.

3. The method (100) of claim 2, wherein the step of processing the depth information to define a set of sampling points (240) along the sampling ray (220) for each pixel in each second region comprises, for each pixel:
defining a plurality of initial sampling points for the sampling ray for the pixel; and
for each initial sampling point:
projecting the initial sampling point to each 2D image frame, other than the 2D image frame to which the pixel belongs, to identify a projected pixel in each 2D image frame; and
in response to a determination that each projected pixel is within a first region of the respective 2D image frame:
inversely projecting each projected pixel to the scene, using the depth value of the projected pixel, to identify an inversely-projected point for each projected pixel;
determining a distance between each inversely-projected point and the initial sampling point; and
in response to a determination that the distances between the initial sampling point and each inversely-projected point are all greater than a predetermined distance, excluding the initial sampling point from the set of sampling points for the pixel.

4. A method (400) for rendering an image frame at a target viewpoint, the method comprising:
obtaining:
a plurality of 2D image frames (505) of a scene, each 2D image frame having been acquired from a different viewpoint;
depth information for the scene;
information identifying one or more first regions and one or more second regions of each 2D image frame; and
information defining an implicit neural visual representation trained using the second regions of the plurality of 2D image frames;
defining a target viewpoint;
processing the first regions from the plurality of 2D image frames and the depth information for the first regions to determine a color value for each of a plurality of pixels in an image frame at the target viewpoint; and
for each pixel in the image frame for which a color value has not been determined by processing the first regions and the depth information for the first regions, using the defined implicit neural visual representation to determine a color value for the pixel.

5. The method (400) of claim 4, wherein:
the defined implicit neural visual representation is a neural volume rendering model; and
the step of using the defined implicit neural visual representation to determine a color value for the pixel comprises:
generating a sampling ray for the pixel based on the target viewpoint;
defining a set of sampling points along the sampling ray;
using the implicit neural visual representation to generate a color and density for each sampling point; and
processing the generated colors and densities to determine a color value for the pixel.

6. The method (400) of claim 5, wherein the step of defining a set of sampling points along the sampling ray for each pixel comprises processing the depth information to define the set of sampling points.

7. The method (400) of claim 6, wherein the step of defining a set of sampling points along the sampling ray for each pixel comprises, for each pixel:
defining a plurality of initial sampling points for the sampling ray for the pixel; and
for each initial sampling point:
projecting the initial sampling point to each 2D image frame, other than the 2D image frame to which the pixel belongs, to identify a projected pixel in each 2D image frame; and
in response to a determination that each projected pixel is within a first region of the respective 2D image frame:
inversely projecting each projected pixel to the scene, using the depth value of the projected pixel, to identify an inversely-projected point for each projected pixel;
determining a distance between each inversely-projected point and the initial sampling point; and
in response to a determination that the distances between the initial sampling point and each inversely-projected point are all greater than a predetermined distance, excluding the initial sampling point from the set of sampling points for the pixel.

8. The method (400) of any of claims 1 to 7, wherein the implicit neural visual representation is a neural radiance field model.

9. A computer program product comprising computer program code means which, when executed on a computing device having a processing system, cause the processing system to perform all of the steps of the method (100, 400) according to any of claims 1 to 8.

10. A first processing system for processing immersive video, the first processing system being configured to:
obtain a plurality of 2D image frames of a scene, each 2D image frame having been acquired from a different viewpoint;
process the plurality of 2D image frames to generate depth information for the scene;
for each 2D image frame:
process the depth information to determine, for each of a plurality of regions in the 2D image frame, a confidence measure for the depth information for the region;
identify each region for which the confidence measure exceeds a predetermined confidence threshold as a first region; and
identify each region for which the confidence measure fails to exceed the predetermined confidence threshold as a second region; and
train an implicit neural visual representation using the second regions from the plurality of 2D image frames.

11. The first processing system of claim 10, wherein:
the implicit neural visual representation is a neural volume rendering model; and
the first processing system is configured to train the implicit neural visual representation by:
generating a sampling ray for each pixel in each second region in each 2D image frame;
processing the depth information to define a set of sampling points (240) along the sampling ray for each pixel; and
training the implicit neural visual representation for the set of sampling points for each pixel, using the color of each pixel as ground truth.

12. A second processing system for rendering an image frame at a target viewpoint, the second processing system being configured to:
obtain:
a plurality of 2D image frames of a scene, each 2D image frame having been acquired from a different viewpoint;
depth information for the scene;
information identifying one or more first regions and one or more second regions of each 2D image frame; and
information defining an implicit neural visual representation trained using the second regions of the plurality of 2D image frames;
define a target viewpoint;
process the first regions from the plurality of 2D images and the depth information for the first regions to determine a color value for each of a plurality of pixels in an image frame at the target viewpoint; and
for each pixel in the image frame for which a color value has not been determined by processing the first regions and the depth information for the first regions, use the defined implicit neural visual representation to determine a color value for the pixel.

13. The second processing system of claim 12, wherein:
the defined implicit neural visual representation is a neural volume rendering model; and
the second processing system is configured to use the defined implicit neural representation to determine a color value for the pixel by:
generating a sampling ray for the pixel based on the target viewpoint;
defining a set of sampling points along the sampling ray;
using the implicit neural visual representation to generate a color and density for each sampling point; and
processing the generated colors and densities to determine a color value for the pixel.

14. The second processing system of claim 10, wherein the second processing system is configured to define the set of sampling points along the sampling ray by processing the depth information to define the set of sampling points.

15. A bitstream (515), comprising:
encoded imaging data comprising a plurality of 2D image frames of a scene, each 2D image frame having been acquired from a different viewpoint;
encoded depth information for the scene;
encoded information identifying one or more first regions and one or more second regions of each 2D image frame; and
encoded information defining an implicit neural visual representation trained using the second regions of the plurality of 2D image frames.

16. An encoder (510) configured to encode immersive video, the encoder being configured to:
obtain a plurality of 2D image frames (505) of a scene, each 2D image frame having been acquired from a different viewpoint;
process the plurality of 2D image frames to generate depth information for the scene;
for each 2D image frame:
process the depth information to determine, for each of a plurality of regions in the 2D image frame, a confidence measure for the depth information for the region;
identify each region for which the confidence measure exceeds a predetermined confidence threshold as a first region; and
identify each region for which the confidence measure fails to exceed the predetermined confidence threshold as a second region;
train an implicit neural visual representation using the second regions from the plurality of 2D image frames; and
encode the plurality of 2D image frames, depth information, information identifying the first regions and second regions and information defining the trained implicit neural visual representation into a bitstream (515).

17. A decoder (520) configured to decode immersive video, the decoder being configured to:
receive a bitstream (515) comprising:
encoded imaging data comprising a plurality of 2D image frames (505) of a scene, each 2D image frame having been acquired from a different viewpoint;
encoded depth information for the scene;
encoded information identifying one or more first regions and one or more second regions of each 2D image frame; and
encoded information defining an implicit neural visual representation trained using the second regions of the plurality of 2D image frames;
decode the imaging data, the depth information, the information identifying one or more first regions and one or more second regions of each 2D image frame and information defining an implicit neural visual representation;
define a target viewpoint;
process the first regions from the plurality of 2D images and the depth information for the first regions to determine a color value for each of a plurality of pixels in an image frame at the target viewpoint; and
for each pixel in the image frame for which a color value has not been determined by processing the first regions and the depth information for the first regions, use the defined implicit neural visual representation to determine a color value for the pixel.
